# EUROPÄISCHE PATENTSCHRIFT

(11) **EP 4 341 605 B1**
(45) Veröffentlichungstag und Bekanntmachung des Hinweises auf die Patenterteilung: **31.12.2025**
(21) Anmeldenummer: 22718216.9
(22) Anmeldetag: 28.03.2022
(51) Int. Cl.: F21S 41/20, F21S 41/55, B60R 13/04

(54) **KRAFTFAHRZEUGSCHEINWERFER MIT ZIERELEMENT UND VERFAHREN ZUR MONTAGE DES ZIERELEMENTS**
MOTOR VEHICLE HEADLIGHT HAVING A DECORATIVE ELEMENT AND METHOD FOR MOUNTING THE DECORATIVE ELEMENT
PHARE DE VÉHICULE AUTOMOBILE POURVU D'UN ÉLÉMENT DÉCORATIF ET PROCÉDÉ DE MONTAGE DE L'ÉLÉMENT DÉCORATIF

(30) Priorität: 18.05.2021 DE 102021205002
(43) Veröffentlichungstag der Anmeldung: 27.03.2024
(73) Patentinhaber: Stellantis Auto SAS, 78300 Poissy (FR)
(72) Erfinder: HOLDERRIED, Stefan, 65428 Rüsselsheim am Main (DE); BACH, Michael, 65428 Rüsselsheim am Main (DE)
(74) Vertreter: BCIP
(86) Internationale Anmeldenummer: PCT/EP2022/058067
(87) Internationale Veröffentlichungsnummer: WO 2022/242941

(56) Entgegenhaltungen:
- EP-A1- 3 263 976
- CN-A- 108 082 066
- DE-A1- 102004 025 232
- DE-A1- 102004 026 467
- DE-A1- 102014 100 606
- FR-A1- 3 095 495
- JP-A- 2012 099 326

## Beschreibung

### Technisches Gebiet

Die vorliegende Entwicklung betrifft einen Kraftfahrzeugscheinwerfer mit zumindest einem Zierelement, insbesondere mit einer auf einem Scheinwerferglas angeordneten Zierleiste oder Rahmen.

### Hintergrund

Die Verwirklichung von Designvorgaben im Kraftfahrzeugaußenbereich erfordert neuartige Lösungen, insbesondere im Hinblick auf die wechselseitige Befestigung unterschiedlicher Komponenten und Materialien. So erweist sich die Befestigung eines Zierelements, beispielsweise am Glas eines Scheinwerfers als außerordentlich komplex. Die Befestigung von Zierelementen an einem Kraftfahrzeugscheinwerfer erfordert oftmals die Verwendung gesonderter Befestigungselemente, etwa von speziell auf das Zierelement abgestimmten Trägern oder Klammern. Die Verwendung solcher Befestigungselemente kann mitunter zu Kratzern am Scheinwerferglas und damit zu einer Beschädigung des Glases oder seiner Beschichtung führen.

Die Verwendung gesonderter Montageträger für ein Zierelement hat ferner einen negativen Einfluss auf die Einhaltung von Einbau- oder Zusammenbautoleranzen, da sie die Toleranzkette erweitern. Die Verwendung gesonderter oder einer Vielzahl von Füge- oder Befestigungsteilen erweist sich auch in montagetechnischer Hinsicht als aufwendig und komplex. Die Verwendung gesonderter Montageteile für die Befestigung eines Zierelements am Scheinwerfer erfordert die Handhabung einer entsprechenden Anzahl von Teilen. Gesonderte Befestigungsteile, etwa Trägerelemente für die Befestigung eines Zierelements am Scheinwerfer oder Scheinwerfergehäuse weisen oftmals über die Lebensdauer des Scheinwerfers eine nicht ausreichende mechanische Stabilität und Steifigkeit auf, um etwa das Zierelement oder die Zierleiste dauerhaft in einer geforderten Position oder Form zu halten. Die Steifigkeit solcher Befestigungselemente wird durch Anforderungen im Hinblick auf den Fußgängerschutz beschränkt. Eine ausreichende mechanische Steifigkeit kann oftmals durch den nur begrenzt zur Verfügung stehenden Bauraum nicht erreicht werden.

Aus dem Stand der Technik sind die DE 10 2004 025 232 A1 und der DE 10 2004 026 467 A1 bekannt.

Insoweit liegt der vorliegenden Entwicklung die Aufgabe zugrunde, einen verbesserten Kraftfahrzeugscheinwerfer mit einem Zierelement bereitzustellen, welches besonders einfach, dauerhaltbar und kostengünstig am Kraftfahrzeugscheinwerfer befestigbar ist. Der für die Befestigung des Zierelements vorgesehene Bauraum soll auf ein Minimum reduziert werden. Herstellungs- und Montagekosten sowie Montageaufwand sollen ebenfalls auf ein Minimum reduziert werden.

Diese Aufgabe wird mit einem Kraftfahrzeugscheinwerfer, mit einem Kraftfahrzeug sowie mit einem Verfahren zur Befestigung eines Zierelements an einem Kraftfahrzeugscheinwerfer gemäß den Merkmalen der unabhängigen Patentansprüche gelöst. Vorteilhafte Ausgestaltungen sind dabei jeweils Gegenstand abhängiger Patentansprüche.

Insoweit ist ein Kraftfahrzeugscheinwerfer mit einem Scheinwerferglas und mit einem Zierelement vorgesehen. Das Zierelement ist dabei unmittelbar an einer Außenseite des Scheinwerferglases klebend befestigt. Das Zierelement ist insbesondere ausschließlich über eine klebende Befestigung an der Außenseite des Scheinwerferglases fixiert oder fixierbar. Durch die unmittelbare und ausschließlich mittels eines Klebstoffs herbeigeführte klebende Befestigung kann eine sich über große Teile des Zierelements erstreckende Fügestelle oder ein entsprechender Fügebereich gebildet werden, über welchen das Zierelement unmittelbar mit der Außenseite des Scheinwerferglases stoffschlüssig verbunden ist.

Eine derartige, z.B. nahezu vollflächige wechselseitige klebende Befestigung von Zierelement und Scheinwerferglas ermöglicht eine dauerhaltbare, ggf. unlösbare wechselseitige Verbindung zwischen dem Zierelement und dem Scheinwerferglas. Hierdurch wird ferner erreicht, dass das Zierelement über die gesamte Lebensdauer des Scheinwerfers oder des Scheinwerferglases eine unveränderte Position einnimmt und keinerlei oder wenn überhaupt nur geringsten Verformungen unterliegt. Durch die unmittelbare klebende Befestigung des Zierelements an der Außenseite des Scheinwerferglases kann ferner auf gesonderte Befestigungselemente, wie etwa Klammern oder gesonderte mechanische Träger für das Zierelement verzichtet werden. Hierdurch kann die Anzahl der für den Zusammenbau des Scheinwerfers benötigten Bauteile reduziert werden, was ferner mit einer Effizienzsteigerung für den Fertigungsprozess einhergeht. Zudem kann durch den Wegfall gesonderter Befestigungselemente Gewicht und Bauraum für die Befestigung des Zierelements am Scheinwerferglas eingespart werden. Herstellungskosten und das Gewicht des Scheinwerfers können somit reduziert werden.

Erfindungsgemäß weist das Zierelement in Montagestellung am Scheinwerferglas eine dem Scheinwerferglas zugewandte Innenseite auf und ist das Zierelement über seine Innenseite mit der Außenseite des Scheinwerferglases verklebt. In der Endmontagestellung befindet sich ein Klebstoff zwischen der Innenseite des Zierelements und der Außenseite des Scheinwerferglases. Ausschließlich über den Klebstoff erfolgt hierbei eine wechselseitige klebende Verbindung zwischen der Innenseite des Zierelements und der Außenseite des Scheinwerferglases. Typischerweise und für das Verfahren zur Montage des Zierelements am Kraftfahrzeugscheinwerfer ist vorgesehen, den Klebstoff vor einem Zusammenfügen von Zierelement und Scheinwerferglas zunächst ausschließlich an der Innenseite des Zierelements anzubringen und das mit dem Klebstoff versehene Zierelement an die Außenseite des Scheinwerferglases heranzuführen und dort, etwa durch Andrücken, zu fixieren. Das Zierelement und das Scheinwerferglas können in der Endmontagestellung beispielsweise mit hierfür vorgesehenen Schablonen wechselseitig zueinander fixiert und positioniert werden, bis der Klebstoff ausgehärtet ist.

Nach einer weiteren Ausgestaltung weist das Zierelement an seiner Innenseite eine Zentrieraufnahme auf, die korrespondierend zu einem an der Außenseite des Scheinwerferglases vorgesehenen Zentrierfortsatz ausgebildet ist. Die Zentrieraufnahme ist passgenau zum Zentrierfortsatz ausgestaltet. Der Zentrierfortsatz kann in die Zentrieraufnahme eingeführt werden, um eine korrekte wechselseitige Positionierung von Zierelement und Scheinwerferglas bereitzustellen. Der Zentrierfortsatz, welcher auch als Zentrierdom von der Außenseite des Scheinwerferglases hervorsteht, kann beispielsweise einen konischen oder zumindest bereichsweise mit einer Schräge versehenen Querschnitt aufweisen, welcher korrespondierend oder komplementär zu einem konischen Querschnitt oder einer entsprechenden Schräge der Zentrieraufnahme ausgestaltet ist.

Eine konische Aufnahme und ein konischer Fortsatz ermöglichen eine korrekte wechselseitige Ausrichtung von Zierelement und Scheinwerferglas im Montageprozesses. Durch miteinander korrespondierende Schrägflächen an der Innenseite der Zentrieraufnahme und an der Außenseite des Zentrierfortsatzes erfolgt eine korrekte Positionierung des Zierelements in einer Ebene senkrecht zur Flächennormalen des Scheinwerferglases oder senkrecht zur Längserstreckung des Zentrierfortsatzes.

Bei einer alternativen Ausgestaltung kann vorgesehen sein, dass das Zierelement an seiner Innenseite einen Zentrierfortsatz aufweist, der korrespondierend oder komplementär zu einer an der Außenseite des Scheinwerferglases vorgesehenen Zentrieraufnahme ausgebildet ist. Auch hierbei können der Zentrierfortsatz und die Zentrieraufnahme, wie zuvor geschildert, einen konischen oder zumindest bereichsweise schräg verlaufenden Querschnitt oder eine entsprechende Querschnittskontur aufweisen, um im Zuge des Montageprozesses eine Ausrichtung des Zierelements relativ zum Scheinwerferglas in der Ebene senkrecht zur Längserstreckung des Zentrierfortsatzes zu erreichen.

Nach einer weiteren Ausgestaltung weist das Zierelement zumindest zwei in einem vorgegebenen Abstand voneinander angeordnete Zentrieraufnahmen oder Zentrierfortsätze auf, die korrespondierend zu entsprechenden Zentrierfortsätzen oder Zentrieraufnahmen an der Außenseite des Scheinwerferglases ausgebildet sind.

Mehrere Zentrieraufnahmen oder Zentrierfortsätze können insbesondere an gegenüberliegenden Endabschnitten des Zierelements ausgebildet oder vorgesehen sein. Hierdurch wird eine besonders einfache und zugleich präzise wechselseitige Ausrichtung und Befestigung des Zierelements und des Scheinwerferglases erreicht.

Erfindungsgemäß ist die Innenseite des Zierelements im Wesentlichen eben ausgestaltet und weist zumindest zwei von der Ebene der Innenseite hervorstehende Abstandshalter auf. Die Abstandshalter können als abgerundete, etwa konvex abgerundete Vorsprünge ausgestaltet sein, die von der ebenen Innenseite des Zierelements hervorstehen und die in Montagestellung am Scheinwerferglas unmittelbar am Scheinwerferglas zur Anlage gelangen.

Die abgerundete, etwa sphärische oder halbsphärische Ausgestaltung der Abstandshalter verhindert eine Beschädigung oder ein Verkratzen des Scheinwerferglases im Zuge des Montageprozesses. Mit den Abstandshaltern kann ferner ein gewisses Spaltmaß zwischen der Innenseite des Zierelements und der Außenseite des Scheinwerferglases definiert und eingestellt werden, sodass für den sich zwischen der Innenseite des Zierelements und der Außenseite des Scheinwerferglases befindlichen Klebstoff ausreichend Platz vorhanden ist. Mittels der Abstandshalter kann ferner erreicht werden, dass ein vorgegebener Mindestabstand zwischen der Innenseite des Zierelements und der Außenseite des Scheinwerferglases nicht unterschritten werden kann, was andernfalls im Montageprozess zu einem Herausquetschen des fließfähigen Klebstoffs führen könnte.

Nach einer weiteren Ausgestaltung weist das Zierelement eine längserstreckte Zierleiste auf, die in einem Randbereich des Scheinwerferglases angeordnet ist. Die Zierleiste kann insbesondere ein längserstrecktes Profilteil aufweisen oder als längserstrecktes Profilteil ausgestaltet sein. Die Zierleiste ist insbesondere am Rand des Scheinwerferglases angeordnet und bildet insoweit eine Randleiste für das Scheinwerferglas. Das Zierelement kann sich, bezogen auf die spätere Einbauposition am Kraftfahrzeug typischerweise entlang eines oberen und/oder eines unteren Außenrands des von außen sichtbaren Bereichs des Scheinwerferglases erstrecken.

Nach einer weiteren Ausgestaltung bildet das Zierelement eine randseitige Einfassung für das Scheinwerferglas, die mehrere aneinander angrenzende Schenkel aufweist. Beispielsweise kann das Zierelement eine Art Rahmen oder eine rahmenartige Einfassung für das Scheinwerferglas bilden. Bei einigen Ausführungsformen kann die Zierleiste einen ersten Schenkel, einen zweiten Schenkel und einen dritten Schenkel aufweisen. Der erste und der dritte Schenkel können sich beispielsweise im Wesentlichen parallel zueinander erstrecken. Der erste und der dritte Schenkel können als solche im Wesentlichen geradlinig oder annähernd geradlinig ausgestaltet sein. Der zweite Schenkel kann sich zwischen dem ersten und dem dritten Schenkel erstrecken und insoweit als Verbindungsschenkel zwischen dem ersten und dem dritten Schenkel fungieren.

Das Zierelement kann insoweit eine U-förmige Zierleiste bilden. Bei anderen Ausführungsformen kann auch vorgesehen sein, dass die Zierleiste einen geschlossenen Rahmen bildet, welcher den gesamten Randbereich des Kraftfahrzeugscheinwerfers bzw. seines Scheinwerferglases einfasst. Bei einer U-förmigen Ausgestaltung des Zierelements ist insbesondere vorgesehen, dass ein oberer Seitenrand des Scheinwerferglases, ein unterer Seitenrand des Scheinwerferglases und ein in Fahrzeugquerrichtung außenliegender Außenrand des Scheinwerferglases vom Zierelement eingefasst oder hiermit versehen ist. Der in Fahrzeugquerrichtung innenliegende Randbereich des Scheinwerferglases, welcher beispielsweise an einen Kühlergrill oder an eine Frontblende anschließt, kann frei von einem Zierelement sein.

Nach einer weiteren Ausgestaltung ist das Zierelement als Kunststoff-Spritzgussbauteil ausgestaltet. Das Zierelement ist insoweit besonders kostengünstig in großer Stückzahl herstellbar. Die Ausgestaltung als Kunststoff-Spritzgussbauteil ermöglicht eine nahezu beliebige, an die Designvorgaben des Kraftfahrzeugscheinwerfers anpassbare Formgebung für das Zierelement. Mittels eines Spritzguss-Fertigungsprozesses können auch etwaige Vertiefungen oder Aufnahmen sowie Fortsätze, etwa an der Innenseite des Zierelements quasi kostenneutral verwirklicht werden, um etwa die bereits oben genannte Zentrieraufnahme oder einen Zentrierfortsatz zu bilden. Gleichermaßen kann die Innenseite des Zierelements im Zuge eines Spritzgussprozesses mit einer oder mit mehreren als Klebstoffaufnahme ausgestalteten Vertiefungen versehen werden, für deren Bereitstellung insoweit dann keine gesonderten Fertigungsschritte mehr erforderlich sind.

Nach einer weiteren Ausgestaltung ist die Außenseite des Zierelements mit einer Metallbeschichtung versehen. Die Außenseite kann insbesondere mit einer Chrombeschichtung versehen sein, die dem Zierelement eine Metalloptik verleiht. Insbesondere kann die Außenseite des Zierelements einen gewissen Glanzeffekt bereitstellen und insoweit metallisch glänzend ausgeführt sein. Dies verleiht dem Kraftfahrzeugscheinwerfer ein besonders hochwertiges Erscheinungsbild und Außendesign.

Nach einer weiteren Ausgestaltung des Kraftfahrzeugscheinwerfers weist das Zierelement an seiner Innenseite zumindest eine als Vertiefung ausgestaltete Klebstoffaufnahme auf. Die Klebstoffaufnahme kann gegenüber der im Wesentlichen ebenen Innenseite als Vertiefung ausgestaltet sein. Die Vertiefung kann insbesondere als eine Art Tasche ausgebildet werden, in welche der Klebstoff für die Befestigung des Zierelements am Scheinwerferglas eingebracht und aufgenommen werden kann.

Mittels einer Vertiefung und mittels der Klebstoffaufnahme kann die für die Befestigung für das Zierelement vorgesehene Klebstoffmenge erhöht werden. So kann mittels der als Vertiefung ausgestalteten Klebstoffaufnahme die Gesamtmenge an Klebstoff für die Fixierung und Befestigung des Zierelements am Scheinwerferglas gesteigert werden, wodurch eine bessere und dauerhaltbare Befestigung des Zierelements am Scheinwerferglas erreicht werden kann.

Nach einer weiteren Ausgestaltung ist an der Außenseite des Scheinwerferglases zumindest ein sich von der Ebene des Scheinwerferglases erhebender Fortsatz ausgebildet, der im Montagezustand des Zierelements am Scheinwerferglas in der zumindest einen Klebstoffaufnahme zu liegen kommt. Der Fortsatz kann sich insbesondere parallel zur Flächennormalen einer Lichtaustrittsfläche des Scheinwerferglases erstrecken. Er muss nicht zwangsläufig in der Ebene des Scheinwerferglases liegen. Der Fortsatz kann insbesondere in einem gegenüber der Lichtaustrittsfläche zurückversetzten Randbereich des Scheinwerferglases vorgesehen oder ausgebildet sein. Der Fortsatz kann einstückig mit dem Scheinwerferglas ausgebildet sein. Er kann als integraler Bestandteil des Scheinwerferglases ausgebildet sein.

Das Scheinwerferglas kann als Kunststoff-Spritzgussteil ausgebildet sein. Das Scheinwerferglas kann insbesondere einen Polycarbonatkunststoff aufweisen. Dies ermöglicht die Integration eines für die Montage im oder am Randbereich des Scheinwerferglases. Bei anderen Ausführungsformen ist das Scheinwerferglas, bzw. die den Scheinwerfer nach außen hin abdeckende Scheibe aus einem Glaswerkstoff ausgebildet.

Der Fortsatz des Scheinwerferglases ermöglicht es, die wechselseitige und von Klebstoff umschlossenen oder mit Klebstoff in Kontakt gelangenden Kontaktflächen des Scheinwerferglases zu vergrößern. Der Fortsatz weist typischerweise gegenüberliegende Seitenwangen auf, die im Endmontagezustand zumindest partiell von Klebstoff umschlossen sind. Die Seitenwangen des Fortsatzes bilden insoweit eine Klebefläche, die im Endmontagezustand im Inneren der Klebstoffaufname zu liegen kommt.

Im Zuge der Montage ist insbesondere vorgesehen, dass der zumindest eine am Scheinwerferglas ausgebildete Fortsatz in die mit Klebestoff gefüllte Klebstoffaufnahme an der Innenseite des Zierelements hineingedrückt wird. Die Klebstoffaufnahme kann vor oder während des Montageprozesses vollständig oder auch nur partiell mit Klebestoff gefüllt werden. Mit Erreichen der Endmontagestellung und beim Eintauchen des sich vom Scheinwerferglas erhebenden Fortsatzes wird nur so viel Klebstoff in der Klebstoffaufnahme oder aus der Klebstoffaufnahme heraus verdrängt, der dem Volumen des Fortsatzes entspricht.

Von Vorteil sind an der Innenseite des Zierelements mehrere, in einem Abstand voneinander angeordnete, jeweils als Vertiefung ausgestaltete Klebstoffaufnahmen vorgesehen, die mit entsprechenden Fortsätzen aufseiten des Scheinwerferglases korrespondieren. Die Klebstoffaufnahmen und die hiermit korrespondierenden Fortsätze können insbesondere im Randbereich des Scheinwerferglases sowie in Längsrichtung des Zierelements versetzt und beabstandet voneinander vorgesehen sein.

Die konkrete Anzahl und die jeweilige geometrische Ausgestaltung der Klebstoffaufnahmen und der korrespondierenden Fortsätze definiert für den jeweils infrage kommenden Klebstoff eine Haltekraft für das Zierelement am Scheinwerferglas. Durch Variation der Anzahl und/oder der Geometrien von Fortsätzen und komplementär oder korrespondierenden Klebstoffaufnahmen aufseiten des Scheinwerferglases einerseits und aufseiten des Zierelements andererseits können für das jeweilige Zierelement geforderte Halte- und Haftkräfte bedarfsgerecht eingestellt und ggf. auch modifiziert werden.

Nach einer weiteren Ausgestaltung weist der zumindest eine Fortsatz eine Erstreckung in Längsrichtung des Zierelements auf, die größer ist als seine Höhe entlang oder im Wesentlichen parallel zur Flächennormalen des Scheinwerferglases. Der zumindest eine Fortsatz kann insbesondere als eine Art Klinge ausgestaltet sein, die sich als längserstreckter Steg mit etwa konstantem Querschnittsprofil entlang der Längsrichtung des Außenrandes des Scheinwerferglases erstreckt. Die Längserstreckung des Fortsatzes fällt typischerweise mit der Längserstreckung des jeweiligen Zierelements oder eines Abschnitts des Zierelements zusammen oder verläuft parallel hierzu.

Nach einer weiteren Ausgestaltung des Kraftfahrzeugscheinwerfers weist das Scheinwerferglas oder die transparente Scheinwerferscheibe angrenzend an den Randbereich eine im Wesentlichen ebene oder konvex gewölbte Lichtaustrittsfläche auf. Bezogen auf die Flächennormale der Lichtaustrittsfläche ist der Randbereich abgestuft und zurückversetzt ausgebildet. Mit anderen Worten befindet sich eine Außenseite des Randbereichs zurückversetzt gegenüber einer Außenseite der Lichtaustrittsfläche. Eine derart abgestufte oder abgetreppte Ausgestaltung des Randbereichs ist für eine flächenbündige Anordnung des Zierelements mit der Lichtaustrittsfläche von Vorteil.

Nach einer weiteren Ausgestaltung des Kraftfahrzeugscheinwerfers grenzt die Außenseite des Zierelements bündig an die Außenseite der Lichtaustrittsfläche an. Insoweit bildet die Außenseite des Zierelements eine im Wesentlichen flächenbündige Verlängerung der Lichtaustrittsfläche. Dies kann insbesondere durch die zurückversetzte und abgestufte Ausgestaltung des Randbereichs des Scheinwerferglases erreicht werden, an welchem das Zierelement klebend befestigt ist, bzw. wird.

Nach einem weiteren Aspekt betrifft die vorliegende Entwicklung ein Kraftfahrzeug mit einer Kraftfahrzeugkarosserie, an welcher zumindest ein zuvor beschriebener Kraftfahrzeugscheinwerfer angeordnet ist. Typischerweise handelt es sich bei dem Kraftfahrzeugscheinwerfer um einen Frontscheinwerfer. Der Scheinwerfer weist neben dem Scheinwerferglas typischerweise ein Scheinwerfergehäuse sowie zumindest ein im Inneren des Scheinwerfergehäuses angeordnetes Leuchtmittel auf. Das vom Leuchtmittel emittierte Licht kann durch das Scheinwerferglas hindurch propagieren und typischerweise einen vor dem Kraftfahrzeug liegenden Bereich bedarfsgerecht ausleuchten.

Nach einem weiteren Aspekt betrifft die vorliegende Entwicklung ein Verfahren zur Montage eines zuvor beschriebenen Kraftfahrzeugscheinwerfers. Das Verfahren zeichnet sich dadurch aus, dass einerseits ein Scheinwerferglas und andererseits ein Zierelement bereitgestellt werden. Alsdann erfolgt das Auftragen eines Klebstoffs an einer Innenseite des Zierelements und nachfolgend ein unmittelbares klebendes Befestigen des Zierelements an der Außenseite des Scheinwerferglases. Sämtliche zuvor beschriebenen Merkmale, Effekte und Vorteile, die im Zusammenhang mit dem Kraftfahrzeugscheinwerfer und dem Kraftfahrzeug beschrieben sind, gelten gleichermaßen für das Verfahren zu seiner Montage; um umgekehrt.

### Kurzbeschreibung der Figuren

Weitere Ziele, Merkmale sowie vorteilhafte Ausgestaltungen der vorliegenden Entwicklung werden in der nachfolgenden Beschreibung eines Ausführungsbeispiels erläutert. Hierbei zeigen:
- Fig. 1: eine schematische Seitenansicht eines Kraftfahrzeugs,
- Fig. 2: eine schematische Darstellung eines Scheinwerfers in Draufsicht,
- Fig. 3: eine Innenseite eines am Scheinwerferglas zu befestigenden Zierelements,
- Fig. 4: eine schematische Darstellung des in Fig. 2 gezeigten Scheinwerferglases mit einem daran angeordneten Zierelement gemäß Fig. 3,
- Fig. 5: einen Querschnitt A-A gemäß Fig. 2,
- Fig. 6: einen Querschnitt B-B gemäß Fig. 2,
- Fig. 7: einen Querschnitt C-C gemäß Fig. 3,
- Fig. 8: einen Querschnitt D-D gemäß Fig. 3,
- Fig. 9: einen Querschnitt E-E gemäß Fig. 4,
- Fig. 10: eine vergrößerte Darstellung eines in Fig. 2 rechts unten dargestellten Fortsatzes und
- Fig. 11: ein Flussdiagramm eines Verfahrens zur Montage des Kraftfahrzeugscheinwerfers.

### Detaillierte Beschreibung

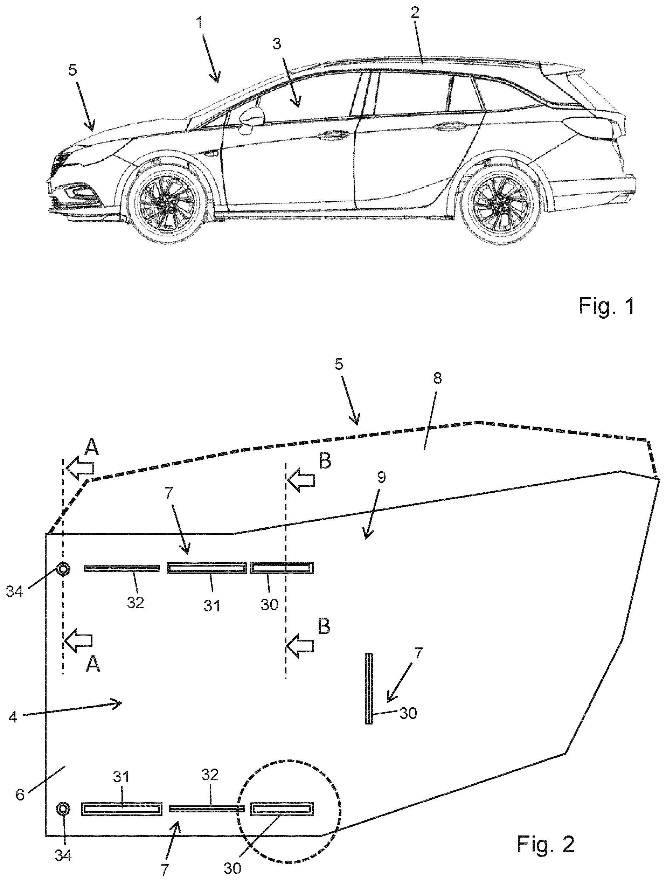

Das in Fig. 1 gezeigte Kraftfahrzeug 1 weist eine Kraftfahrzeugkarosserie 2 mit einem als Fahrgastzelle fungierenden Innenraum 3 auf. Das Kraftfahrzeug 1 weist ferner am frontseitigen Ende, mithin an seiner Fahrzeugfront zwei Kraftfahrzeugscheinwerfer 5 auf. In Fig. 2 ist ein solcher Kraftfahrzeugscheinwerfer 5 schematisch angedeutet. Der Kraftfahrzeugscheinwerfer 5 weist ein lediglich gestrichelt dargestelltes Scheinwerfergehäuse 8 auf, welches, bezogen auf die spätere Einbauposition am Kraftfahrzeug 1 in Fahrtrichtung, mit einem Scheinwerferglas 6 oder mit einer entsprechenden transparenten Scheibe versehen ist. Im vorliegend nicht gezeigten Innenraum des Scheinwerfergehäuses 8 befindet sich zumindest ein Leuchtmittel. Das vom Leuchtmittel emittierte Licht kann durch das Scheinwerferglas 6 hindurch propagieren und insbesondere den vor dem Kraftfahrzeug liegenden Bereich ausleuchten.

Das gezeigte Ausführungsbeispiel betrifft einen Frontscheinwerfer. Die vorliegende Entwicklung ist jedoch nicht auf Frontscheinwerfer begrenzt, sie kann gleichermaßen auch beliebige andere Scheinwerfer, etwa einen Rückfahrscheinwerfer oder ein Rücklicht oder dergleichen Beleuchtungsanordnungen im Außenbereich des Kraftfahrzeugs betreffen.

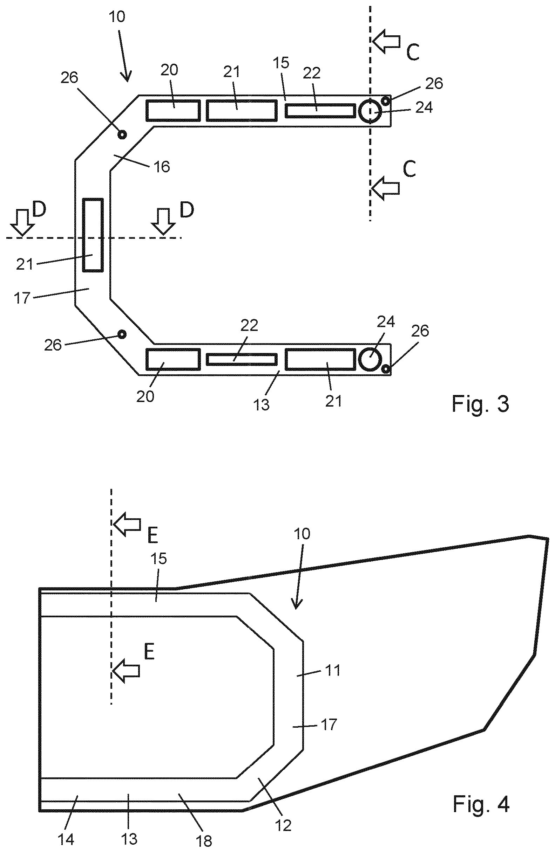

In Fig. 2 ist das Scheinwerferglas 6 nur schematisch als leicht gebogene Scheibe dargestellt. Das Scheinwerferglas weist insbesondere einen in Fahrtrichtung weisenden Randbereich 7 auf, an welchem ein Zierelement 10 zu befestigen ist, wie dies beispielsweise in Fig. 4 dargestellt ist. Das Zierelement 10 ist vorliegend als Zierleiste 11 oder als Rahmen 12 ausgestaltet. Das Zierelement 10 weist mehrere Schenkel 13, 15, 17 auf, welche eine Art U-förmiges Zierelement 10 bilden. Das Zierelement 10 weist vorliegend einen ersten Schenkel 13 auf, welcher sich entlang eines untenliegenden Randbereichs 7 des Scheinwerferglases 6 erstreckt. Hieran grenzt ein dritter Schenkel 17 an, welcher sich in der in Fig. 4 gezeigten Endmontagestellung entlang eines in Fahrzeugquerrichtung (y) liegenden Außenrandbereichs 7 des Scheinwerferglases 6 erstreckt.

An das dem ersten Schenkel 13 abgewandte Ende des dritten Schenkels 17 fügt sich ein zweiter Schenkel 15 an, welcher sich entlang eines oben liegenden Randbereichs 7 des Scheinwerferglases 6 erstreckt. Im gezeigten Ausführungsbeispiel erstrecken sich der erste Schenkel 13 und der zweite Schenkel 15 im Wesentlichen parallel zueinander. Die Schenkel 13, 17, 15 sind einteilig ausgebildet bzw. sie sind integraler Bestandteil eines U-förmigen Zierrahmens, welcher in einem einzigen Montageschritt unter Verwendung eines Klebstoffs an einer Außenseite 9 des Scheinwerferglases 6 klebend befestigbar ist. Für die klebende Befestigung ist ein vorliegend nicht explizit gezeigter Klebstoff vorgesehen, über welchen das Zierelement 10 exklusiv, das heißt ausschließlich mittels des Klebstoffs an der Außenseite 9 des Scheinwerferglases 6 befestigbar ist.

Das Zierelement 10 weist eine in Montagestellung dem Scheinwerferglas 6 zugewandte Innenseite 16 auf, die in Fig. 3 gezeigt ist. Gegenüberliegend weist das Zierelement 10 eine Außenseite 14 auf. Die Außenseite 14 ist vorzugsweise mit einer Beschichtung 18 versehen. Die Beschichtung 18 kann insbesondere als Metallbeschichtung, etwa als Chrombeschichtung ausgestaltet sein. Sie verleiht dem Zierelement ein metallisch glänzendes äußeres Erscheinungsbild.

An der Innenseite 16 sind mehrere als Vertiefungen oder als Napf ausgestaltete Aufnahmen 20, 21, 22 vorgesehen. Die Aufnahmen 20, 21, 22 fungieren als Klebstoffaufnahmen. Der für die klebende Befestigung vorgesehene Klebstoff ist in den Klebstoffaufnahmen 20, 21, 22 positionierbar. Mit anderen Worten können sämtliche oder nur einige der Aufnahmen 20, 21, 22 entweder vollständig oder partiell mit dem vorgesehenen Klebstoff befüllt werden. Zudem ist an der Innenseite 16, bevorzugt an einem freien Ende oder an gegenüberliegenden freien Enden des Zierelements 10 eine Zentrieraufnahme 24 vorgesehen, die komplementär oder korrespondierend zu einem Zentrierfortsatz 34 an der Außenseite 9 des Scheinwerferglases 6 vorgesehen oder ausgebildet ist.

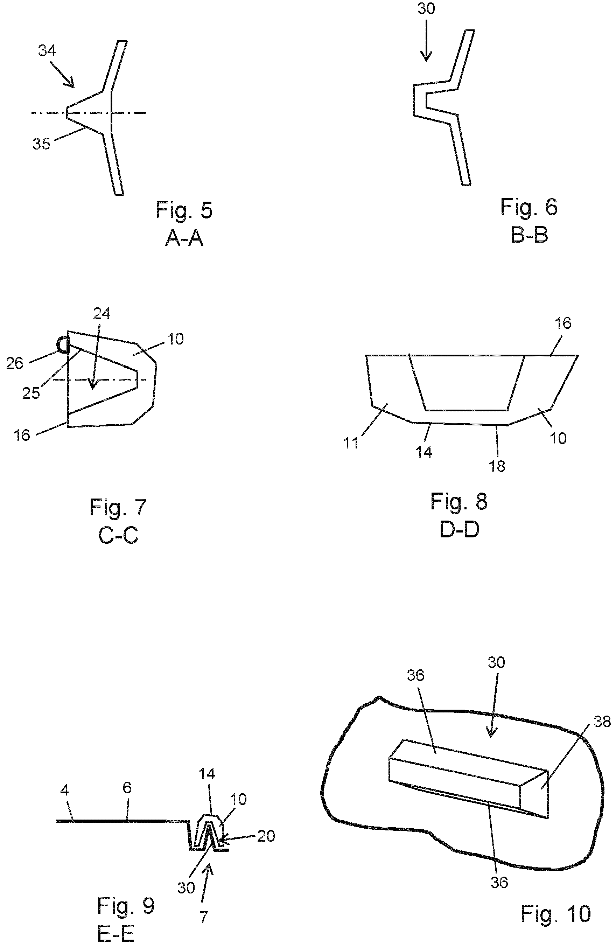

Die Querschnittsgeometrie des Zentrierfortsatzes 34 entspricht der Querschnittsgeometrie der Zentrieraufnahme 24. In der Endmontagestellung wird das Innenvolumen oder der Innenraum der Zentrieraufnahme 24 weitgehend vollständig vom Zentrierfortsatz 34 ausgefüllt. Wie insbesondere im Querschnitt der Fig. 5 und 7 gezeigt, weist der Zentrierfortsatz 34 eine außenliegende Schräge 35 auf, welche mit einer komplementären oder korrespondierenden Schräge 25 an einer Innenseite der Zentrieraufnahme 24 korrespondiert. So können die Zentrieraufnahme 24 und der Zentrierfortsatz 34 insgesamt ein konisches oder zumindest partiell schräg verlaufendes Querschnittsprofil aufweisen, wodurch im Zuge des Einführens des Zentrierfortsatzes 34 in die Zentrieraufnahme eine korrekte Positionierung senkrecht zur Längserstreckung des Zentrierfortsatzes 34 erfolgen kann.

An der Unterseite, mithin an der Innenseite 16 des Zierelements 10 sind ferner mehrere Abstandshalter 26 ausgebildet. Diese stehen oder ragen von der im Wesentlichen eben ausgestalteten Innenseite 16 des Zierelements 10 zumindest geringfügig hervor. Die Abstandshalter können eine nach außen gewölbte bzw. konvex gewölbte Querschnittskontur aufweisen und eine unmittelbare Anlagestellung der ansonsten planaren Innenseite 16 des Zierelements 10 an der Außenseite 9 des Scheinwerferglases 6 verhindern. Mittels der Abstandshalter 26, welche einstückig als integraler Bestandteil mit dem Zierelement ausgestaltet sein können, kann das Zierelement 10 unter Einhaltung eines vorgegebenen Spaltabstands an der Außenseite 9 des Scheinwerferglases 6 klebend fixiert werden.

Für die klebende Befestigung des Zierelements 10 am Scheinwerferglas 6 sind aufseiten des Scheinwerferglases 6, insbesondere in einem Randbereich 7, mehrere Fortsätze 30, 31, 32 vorgesehen, die sich von der Ebene des Randbereichs 7 weg erstrecken. Die Fortsätze 30, 31, 32 haben eine mit den jeweils zugehörigen Klebstoffaufnahmen 20, 21, 22 korrespondierende Geometrie. Das Volumen oder die Verdrängung der Fortsätze 30, 31, 32 ist jedoch geringer als die Größe oder das Volumen der Klebstoffaufnahmen 20, 21, 22.

Die mit Klebstoff zumindest teilweise gefüllten Klebstoffaufnahmen 20, 21, 22 können die jeweiligen hierfür vorgesehenen Fortsätze 30, 31, 32 aufnehmen. Mithin können die Fortsätze 30, 31, 32 bei einer klebenden Fügeoperation von Zierelement 10 und Scheinwerferglas 6 in die mit Klebstoff zumindest bereichsweise gefüllten Klebstoffaufnahmen 20, 21, 22 eintauchen. Dabei können die beispielsweise in Fig. 10 gezeigten Seitenwangen 36 oder Stirnwangen 38 eines jeden Fortsatzes 30, 31, 32 zumindest partiell mit dem Klebstoff in Kontaktstellung gelangen. Durch die Erstreckung der Fortsätze 30, 31, 32 und durch die Ausbildung der gegenüberliegenden Seitenwangen 36 oder Stirnwangen 38 kann die effektive Klebefläche, die aufseiten des Scheinwerferglases 6 bereitgestellt wird, erhöht werden. Hierdurch kann eine Klebehaftung effektiv verbessert werden.

Im Beispiel der Fig. 2 und 3 ist dargestellt, dass die Geometrien der Klebstoffaufnahmen 20, 21, 22 als auch die Geometrien der hiermit korrespondierenden Fortsätze 30, 31, 32 variieren können. Somit können unterschiedliche Haft- oder Klebekräfte zwischen dem Zierelement 10 und dem Scheinwerferglas 6 verwirklicht werden.

In Fig. 9 ist schematisch dargestellt, dass der für die Befestigung und Anordnung des Zierelements 10 vorgesehene Randbereich 7 des Scheinwerferglases 6 abgestuft bzw. gegenüber einer Lichtaustrittsfläche 4 des Scheinwerferglases zurückversetzt ausgebildet ist. Der Versatz kann im Wesentlichen der Höhe des Zierelements 10 entsprechen, sodass mit Erreichen der in Fig. 9 im Querschnitt gezeigten Endmontagestellung eine Außenseite 14 des Zierelements 10 im Wesentlichen bündig mit der seitlich hieran angrenzenden Lichtaustrittsfläche 4 des Scheinwerferglases 6 abschließt. Es ist hierbei ferner denkbar und vorgesehen, dass sich, anders als in Fig. 9 dargestellt, das Zierelement 10 mit seiner Außenseite 14 nahtlos und weitgehend fugenfrei an die Lichtaustrittsfläche 4 des Scheinwerferglases anschmiegt.

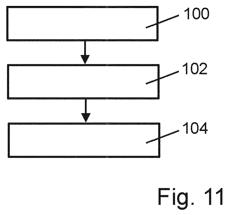

In Fig. 11 ist schließlich ein Flussdiagramm zum Montageverfahren des Kraftfahrzeugscheinwerfers 5 schematisch dargestellt. In einem ersten Schritt 100 wird sowohl das Zierelement 10 als auch das Scheinwerferglas 6 bereitgestellt. Im nachfolgenden Schritt 102 erfolgt ein Auftragen des Klebstoffs an der Innenseite 16 des Zierelements 10. Bevorzugt wird der Klebstoff in die hierfür vorgesehenen Klebstoffaufnahmen 20, 21, 22 eingebracht. In einem nachfolgenden Schritt 104 wird das Zierelement 10 an die Außenseite 9 des Scheinwerferglases angedrückt, wobei die Fortsätze 30, 31, 32 des Scheinwerferglases 6 zumindest partiell in den in den Klebstoffaufnahmen 20, 21, 22 befindlichen Klebstoff eintauchen. Mit Erreichen einer Endmontagestellung können die Zierleiste 10 und das Scheinwerferglas 6 zumindest temporär, etwa mittels geeigneter Schablonen zueinander fixiert werden, bis der Klebstoff ausgehärtet ist.

Die dargestellten Ausführungsformen zeigen lediglich mögliche Ausgestaltungen der Entwicklung, zu welcher im Rahmen der Entwicklung weitere zahlreiche Varianten denkbar sind. Die exemplarisch gezeigten Ausführungsbeispiele sind in keiner Weise hinsichtlich des Umfangs, der Anwendbarkeit oder der Konfigurationsmöglichkeiten der Entwicklung als einschränkend auszulegen. Die vorliegende Beschreibung zeigt dem Fachmann lediglich eine oder einige mögliche Implementierung(en) eines Ausführungsbeispiels auf. So können an der Funktion und Anordnung von beschriebenen Elementen vielfältigste Modifikationen vorgenommen werden, ohne hierbei den durch die nachfolgenden Ansprüche definierten Schutzbereich zu verlassen.

### Bezugszeichenliste

- 1: Kraftfahrzeug
- 2: Kraftfahrzeugkarosserie
- 3: Innenraum
- 4: Lichtaustrittsfläche
- 5: Scheinwerfer
- 6: Scheinwerferglas
- 7: Randbereich
- 8: Scheinwerfergehäuse
- 9: Außenseite
- 10: Zierelement
- 11: Zierleiste
- 12: Rahmen
- 13: Schenkel
- 14: Außenseite
- 15: Schenkel
- 16: Innenseite
- 17: Schenkel
- 18: Beschichtung
- 20: Klebstoffaufnahme
- 21: Klebstoffaufnahme
- 22: Klebstoffaufnahme
- 24: Zentrieraufnahme
- 25: Schräge
- 26: Abstandshalter
- 30: Fortsatz
- 31: Fortsatz
- 32: Fortsatz
- 34: Zentrierfortsatz
- 35: Schräge
- 36: Seitenwange
- 38: Stirnwange

## Patentansprüche

1. Kraftfahrzeugscheinwerfer (5) mit einem Scheinwerferglas (6) und mit einem Zierelement (10), welches unmittelbar an einer Außenseite (9) des Scheinwerferglases (6) klebend befestigt ist, wobei das Zierelement (10) in Montagestellung am Scheinwerferglas (6) eine dem Scheinwerferglas (6) zugewandte Innenseite (16) aufweist, und wobei das Zierelement (10) über seine Innenseite (16) mit der Außenseite (9) des Scheinwerferglases (6) verklebt ist, **dadurch gekennzeichnet, dass** die Innenseite (16) des Zierelement (10) im Wesentlichen eben ausgestaltet ist und zumindest zwei von der Ebene der Innenseite (16) hervorstehende Abstandshalter (26) aufweist.

2. Kraftfahrzeugscheinwerfer (5) nach Anspruch 1, wobei das Zierelement (10) an seiner Innenseite (16) eine Zentrieraufnahme (24) aufweist, die korrespondierend zu einem an der Außenseite (9) des Scheinwerferglases (6) vorgesehenen Zentrierfortsatz (34) ausgebildet ist.

3. Kraftfahrzeugscheinwerfer (5) nach einem der vorhergehenden Ansprüche, wobei das Zierelement (10) eine Zierleiste (11) aufweist, die in einem Randbereich (7) des Scheinwerferglas (6) angeordnet ist.

4. Kraftfahrzeugscheinwerfer (5) nach einem der vorhergehenden Ansprüche, wobei das Zierelement (10) eine randseitige Einfassung für das Scheinwerferglas (6) bildet, die mehrere aneinander angrenzende Schenkel (13, 15, 17) aufweist.

5. Kraftfahrzeugscheinwerfer (5) nach einem der vorhergehenden Ansprüche, wobei das Zierelement (10) als Kunststoff-Spritzgussbauteil ausgestaltet ist.

6. Kraftfahrzeugscheinwerfer (5) nach einem der vorhergehenden Ansprüche, wobei eine Außenseite (14) des Zierelements (10) mit einer Metallbeschichtung versehen ist.

7. Kraftfahrzeugscheinwerfer (5) nach einem der vorhergehenden Ansprüche 1 bis 6, wobei das Zierelement (10) an seiner Innenseite (16) zumindest eine als Vertiefung ausgestaltete Klebstoffaufnahme (20, 21, 22) aufweist.

8. Kraftfahrzeugscheinwerfer (5) nach Anspruch 7, wobei an der Außenseite (9) des Scheinwerferglases (6) zumindest ein sich von der Ebene des Scheinwerferglases (6) erhebender Fortsatz (30, 31, 32) ausgebildet ist, der im Montagezustand des Zierelement (10) am Scheinwerferglas (6) in der zumindest einen Klebstoffaufnahme (20, 21, 22) zu liegen kommt.

9. Kraftfahrzeugscheinwerfer (5) nach Anspruch 8, wobei der zumindest eine Fortsatz (30, 31, 32) eine Erstreckung in Längsrichtung des Zierelements (10) aufweist, die größer ist als seine Höhe entlang oder im westlichen parallel zur Flächennormalen des Scheinwerferglas (6).

10. Kraftfahrzeugscheinwerfer (5) nach einem der vorhergehenden Ansprüche 3 bis 9, wobei das Scheinwerferglas (6) angrenzend an den Randbereich (7) eine im Wesentlichen ebene oder konvex gewölbte Lichtaustrittsfläche (4) aufweist, wobei der Randbereich (7) bezogen auf eine Flächennormale der Lichtaustrittsfläche (4) abgestuft und zurückversetzt ausgebildet oder angeordnet ist.

11. Kraftfahrzeugscheinwerfer (5) nach Anspruch 10, wobei die Außenseite (14) des Zierelements (10) bündig an eine Außenseite (9) der Lichtaustrittsfläche (4) angrenzt.

12. Kraftfahrzeug (1) mit einer Kraftfahrzeugkarosserie (2), an welcher zumindest ein Kraftfahrzeugscheinwerfer (5) nach einem der vorhergehenden Ansprüche angeordnet ist.

## Claims

1. Motor vehicle headlight (5) comprising a headlight lens (6) and a decorative element (10) which is bonded directly to an outer surface (9) of the headlight lens (6), wherein the decorative element (10) in its mounted position on the headlight lens (6) has an inner surface (16) facing the headlight lens (6), and wherein the decorative element (10) is bonded to the outer surface (9) of the headlight lens (6) via its inner surface (16), **characterized in that** the inner surface (16) of the decorative element (10) is substantially planar and has at least two spacers (26) projecting from the plane of the inner surface (16).

2. A motor vehicle headlight (5) according to claim 1, wherein the decorative element (10) has a centering receptacle (24) on its inner surface (16) which corresponds to a centering projection (34) provided on the outer surface (9) of the headlight lens (6).

3. A motor vehicle headlight (5) according to any one of the preceding claims, wherein the decorative element (10) has a decorative strip (11) arranged in an edge region (7) of the headlight lens (6).

4. A motor vehicle headlight (5) according to any one of the preceding claims, wherein the decorative element (10) forms an edge-side bezel for the headlight lens (6) having several adjacent legs (13, 15, 17). X

5. A motor vehicle headlight (5) according to any one of the preceding claims, wherein the decorative element (10) is designed as a plastic injection-molded component.

6. A motor vehicle headlight (5) according to any one of the preceding claims, wherein an outer surface (14) of the decorative element (10) is provided with a metal coating.

7. A motor vehicle headlight (5) according to any one of the preceding claims 1 to 6, wherein the decorative element (10) has at least one adhesive receptacle (20, 21, 22) on its inner surface (16), the latter being designed as a recess.

8. A motor vehicle headlight (5) according to claim 7, wherein at least one projection (30, 31, 32) is formed on the outer surface (9) of the headlight lens (6), extending from the plane of the headlight lens (6), and which, when the decorative element (10) is mounted on the headlight lens (6), rests in the at least one adhesive receptacle (20, 21, 22).

9. A motor vehicle headlight (5) according to claim 8, wherein the at least one extension (30, 31, 32) has a longitudinal extension of the decorative element (10) that is greater than its height along or parallel to the surface normal of the headlight lens (6).

10. A motor vehicle headlight (5) according to any one of the preceding claims 3 to 9, wherein the headlight lens (6) has a substantially flat or convexly curved light-emitting surface (4) adjacent to the edge region (7), the edge region (7) being stepped and recessed with respect to a surface normal of the light-emitting surface (4).

11. A motor vehicle headlight (5) according to claim 10, wherein the outer surface (14) of the decorative element (10) is flush with an outer surface (9) of the light-emitting surface (4).

12. Motor vehicle (1) with a motor vehicle body (2) on which at least one motor vehicle headlight (5) is arranged according to one of the preceding claims.

## Revendications

1. Phare de véhicule automobile (5) comprenant une lentille de phare (6) et un élément décoratif (10) collé directement sur la surface extérieure (9) de la lentille de phare (6). L'élément décoratif (10), une fois monté sur la lentille de phare (6), présente une surface intérieure (16) orientée vers cette dernière. La liaison entre l'élément décoratif (10) et la surface extérieure (9) de la lentille de phare (6) se fait par l'intermédiaire de sa surface intérieure (16). Cette dernière est **caractérisée en ce qu'**elle est sensiblement plane et comporte au moins deux entretoises (26) faisant saillie de son plan.

2. Phare de véhicule automobile (5) selon la revendication 1, dans lequel l'élément décoratif (10) présente un logement de centrage (24) sur sa surface intérieure (16) correspondant à une saillie de centrage (34) ménagée sur la surface extérieure (9) de la lentille de phare (6).

3. Phare de véhicule automobile (5) selon l'une quelconque des revendications précédentes, dans lequel l'élément décoratif (10) comporte une bande décorative (11) disposée sur le bord (7) de la lentille de phare (6).

4. Phare de véhicule automobile (5) selon l'une quelconque des revendications précédentes, dans lequel l'élément décoratif (10) forme une bague latérale pour la lentille de phare (6) comportant plusieurs pattes adjacentes (13, 15, 17).

5. Phare de véhicule automobile (5) selon l'une quelconque des revendications précédentes, dans lequel l'élément décoratif (10) est conçu comme une pièce moulée par injection plastique.

6. Phare de véhicule automobile (5) selon l'une quelconque des revendications précédentes, dans lequel la surface extérieure (14) de l'élément décoratif (10) est munie d'un revêtement métallique.

7. Phare de véhicule automobile (5) selon l'une quelconque des revendications 1 à 6 précédentes, dans lequel l'élément décoratif (10) comporte au moins un réceptacle adhésif (20, 21, 22) sur sa surface intérieure (16), cette dernière étant conçue comme un évidement.

8. Phare de véhicule automobile (5) selon la revendication 7, dans lequel au moins une saillie (30, 31, 32) est formée sur la surface extérieure (9) de la lentille de phare (6), s'étendant à partir du plan de la lentille (6) et qui, lorsque l'élément décoratif (10) est monté sur la lentille (6), repose dans au moins un réceptacle adhésif (20, 21, 22).

9. Phare de véhicule automobile (5) selon la revendication 8, dans lequel l'extension (30, 31, 32) présente un prolongement longitudinal de l'élément décoratif (10) supérieur à sa hauteur, parallèlement à la normale à la surface de la lentille (6).

10. Phare de véhicule automobile (5) selon l'une quelconque des revendications 3 à 9 précédentes, dans lequel la lentille de phare (6) présente une surface d'émission de lumière sensiblement plane ou convexe (4) adjacente à la zone de bord (7), cette dernière étant étagée et en retrait par rapport à la normale à la surface d'émission de lumière (4).

11. Phare de véhicule automobile (5) selon la revendication 10, dans lequel la surface extérieure (14) de l'élément décoratif (10) est affleurante à la surface extérieure (9) de la surface d'émission de lumière (4).

12. Véhicule automobile (1) comportant une carrosserie (2) sur laquelle est disposé au moins un phare (5) selon l'une quelconque des revendications précédentes.
